(19) Europäisches Patentamt
European Patent Office
Office européen des brevets

(11) EP 2 267 738 A1

(12) EUROPÄISCHE PATENTANMELDUNG

(43) Veröffentlichungstag:
**29.12.2010 Patentblatt 2010/52**

(51) Int Cl.:
***H01G 9/042*** *(2006.01)* ***H01G 9/15*** *(2006.01)*

(21) Anmeldenummer: **10012041.9**

(22) Anmeldetag: **02.09.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK RS**

(30) Priorität: **13.09.2005 DE 102005043828**

(62) Dokumentnummer(n) der früheren Anmeldung(en) nach Art. 76 EPÜ:
**06791797.1 / 1 927 120**

(71) Anmelder: **H.C. Starck Clevios GmbH**
**38642 Goslar (DE)**

(72) Erfinder:
- **Merker, Udo, Dr.**
**51105 Köln (DE)**
- **Lövenich, Wilfried, Dr.**
**51469 Bergisch Gladbach (DE)**
- **Wussow, Klaus, Dr.**
**57250 Netphen (DE)**
- **Tillmann, Ralph**
**42799 Leichlingen (DE)**

(74) Vertreter: **Herzog, Martin**
**Herzog Fiesser & Partner**
**Patentanwälte**
**Immermannstrasse 40**
**40210 Düsseldorf (DE)**

Bemerkungen:
Diese Anmeldung ist am 30-09-2010 als Teilanmeldung zu der unter INID-Code 62 erwähnten Anmeldung eingereicht worden.

(54) **Verfahren zur Herstellung von Elektrolytkondensatoren**

(57) Zusammenfassung; Die Erfindung betrifft ein Verfahren zur Herstellung von Klektrolytkondensatoren mit niedrigem äquivalenten Serienwiderstand und niedrigem Reststrom, nach diesem Verfahren hergestellte Elektrolytkondensatoren sowie die Verwendung solcher Hlektrolytkondensaroren.

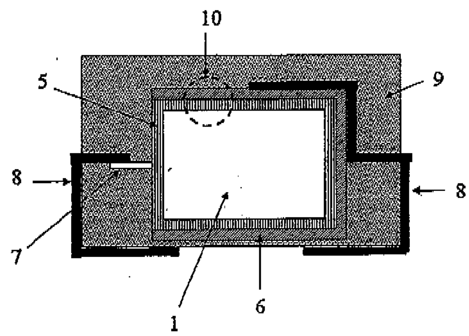


Fig. 1

EP 2 267 738 A1

## Beschreibung

Die Erfindung betrifft ein Verfahren zur Herstellung von Elektrolytkondensatoren mit niedrigem äquivalenten Serienwiderstand und niedrigem Reststrom, nach diesem Verfahren hergestellte Elektrolytkondensatoren sowie die Verwendung solcher Elektrolytkondensatoren.

Ein handelsüblicher Feststoffelektrolytkondensator besteht in der Regel aus einer porösen Metallelektrode, einer auf der Metalloberfläche befindlichen Oxidschicht einem elektrisch leitfähigen Feststoff, der in die poröse Struktur eingebracht wird, einer äußeren Elektrode (Kontaktierung), wie z.B. einer Silberschicht, sowie weiteren elektrischen Kontakten und einer Verkapselung.

Beispiele für Feststoffelektrolytkondensatoren sind Tantal-, Aluminium, Niob- und Nioboxidkondensatoren mit Ladungstransferkomplexen, Braunstein- oder Polymer-Feststoffelektrolyten. Die Verwendung poröser Körper hat den Vorteil, dass sich aufgrund der großen Oberfläche eine sehr hohe Kapazitätsdichte, d.h. eine hohe elektrische Kapazität auf kleinem Raum, erzielen lässt.

Besonders geeignet als Feststoffelektrolyte sind aufgrund ihrer hohen elektrischen Leitfähigkeit πkonjugierte Polymere. π-konjugierte Polymere werden auch als leitfähige Polymere oder als synthetische Metalle bezeichnet. Sie gewinnen zunehmend an wirtschaftlicher Bedeutung, da Polymere gegenüber Metallen Vorteile bezüglich der Verarbeitbarkeit, des Gewichts und der gezielten Einstellung von Eigenschaften durch chemische Modifikation haben. Beispiele für bekannte πkonjugierte Polymere sind Polypyrrole, Polythiophene, Polyaniline, Polyacetylene, Polyphenylene und Poly(p-phenylen-vinylene), wobei ein besonders wichtiges und technisch genutztes Polythiophen das Poly-3,4-(ethylen-1,2-dixoy)thiophen, oft auch als Poly(3,4-ethylendioxythiophen) bezeichnet, ist, da es in seiner oxidierten Form eine sehr hohe Leitfähigkeit aufweist.

Die technische Entwicklung in der Elektronik erfordert zunehmend Feststoffelektrolytkondensatoren mit sehr niedrigen Äquivalenten Serienwiderständen (ESR). Grund dafür sind beispielsweise fallende Logikspannungen, eine höhere Integrationsdichte und steigende Taktfrequenzen in integrierten Schaltkreisen. Ferner senkt ein niedriger ESR auch den Energieverbrauch, was besonders für mobile, batteriebetriebene Anwendungen vorteilhaft ist. Es besteht daher der Wunsch, den ESR von Feststoffelektrolytkondensatoren möglichst weit zu reduzieren.

In der europäischen Patentschrift EP-A- 340 512 wird die Herstellung eines Feststoffelektrolyten aus 3,4-Ethylen-1,2-dioxythiophen und die Verwendung seines durch oxidative Polymerisation hergestellten, kationischen Polymeren als Feststoffelektrolyt in Elektrolytkondensatoren beschrieben. Poly(3,4-ethylendioxythiophen) als Ersatz von Mangandioxid oder von Ladungstransferkomplexen in Feststoffelektrolytkondensatoren senkt aufgrund der höheren elektrischen Leitfähigkeit den äquivalenten Serienwiderstand des Kondensators und verbessert das Frequenzverhalten.

Nachteilig an diesem und ähnlichen Verfahren ist, dass das leitfähige Polymer durch Polymerisation in-situ im Elektrolytkondensator erzeugt wird. Dazu müssen das Monomer, wie z.B. 3,4-Ethylen-1,2-dioxythiophen, und Oxidationsmittel in Gegenwart von Lösungsmitteln zusammen oder nacheinander in den porösen Metallkörper eingebracht und anschließend polymerisiert werden. Eine solche chemische Reaktion ist bei der Herstellung elektronischer Bauteile aber unerwünscht, da es sehr schwierig ist, die chemische Reaktion in Millionen von kleinen porösen Bauteilen immer identisch ablaufen zu lassen, um Kondensatoren gleicher Spezifikation herzustellen.

Weiterhin nachteilig an in-situ Polymerisationen bei der Herstellung von Feststoffelektrolyten für Kondensatoren ist, dass die Oxidationsmittel das Dielektrikum (Oxidschicht) auf der Metallelektrode schädigen können. Als Oxidationsmittel werden in der Regel Übergangsmetallsalze, wie z.B. Fe(III)-Salze, verwendet. Als Reaktionsprodukte der Polymerisation verbleiben nach der Polymerisation dann nicht nur das elektrisch leitfähige Polymer sondern auch die reduzierten Metallsalze, wie z.B. Fe(II)-Salze im Elektrodenkörper zurück. Durch anschließende Waschschritte kann zwar versucht werden, diese Salze zu entfernen. Dies ist jedoch aufwendig und gelingt nicht vollständig, d.h. es verbleiben immer Reste der Metallsalze im Elektrodenkörper zurück. Bekanntlich können insbesondere Übergangsmetalle das Dielektrikum schädigen, so dass die hieraus resultierenden erhöhten Restströme die Lebensdauer der Kondensatoren deutlich reduzieren oder gar einen Einsatz der Kondensatoren unter harschen Bedingungen, wie hohen Temperaturen und/oder hoher Luftfeuchte, unmöglich machen.

Darüber hinaus ist der Herstellungsprozess von Feststoffelektrolytkondensatoren bei Anwendung einer in-situ Polymerisation sehr aufwendig: Ein Polymerisationsprozess (Tränkung, Polymerisation, Waschung) dauert in der Regel mehrere Stunden, unter Umständen müssen hierbei explosionsgefährliche oder toxische Lösungsmittel eingesetzt werden und es bedarf sehr vieler Polymerisationsprozesse, um einen Feststoffelektrolyten herzustellen.

Ein weiterer Nachteil an chemischen in-situ Verfahren zur Herstellung von Feststoffelektrolytkondensatoren ist, dass in der Regel Anionen des Oxidationsmittels oder gegebenenfalls andere monomere Anionen als Gegenionen für das leitfähige Polymer dienen. Aufgrund ihrer geringen Größe sind diese jedoch nicht hinreichend stabil an das Polymer gebunden. Dadurch kann es insbesondere bei erhöhten Einsatztemperaturen des Kondensators zur Diffusion der Gegenionen und damit zu einem Anstieg des äquivalenten Serieawiderstands (ESR) des Kondensators kommen. Der alternative Einsatz von hochmolekularen polymeren Gegenionen in der chemischen in-situ Polymerisation führt nicht zu hinreichenden leitfähigen Filmen und damit nicht zu niedrigen ESR Werten.

In der japanischen Patentanmeldungen JP-A 2001-102255 wird zum Schutz des Oxidfilms und der besseren Adhäsion des Feststoffelektrolyten an den Oxidfilm eine Schicht aus Polyethylendioxythiophen/Polystyrolsulfonsäure direkt auf den Oxidfilm aufgebracht. Auf diese Schicht wird dann mittels in-situ Polymerisation der Feststoffelektrolyt aufgebracht. Auch diese Methode hat jedoch den Nachteil, dass eine in-situ Polymerisation notwendig ist, um einen Kondensator mit niedrigem ESR zu herzustellen.

Eine Polymerisation von Monomeren kann auch in Abwesenheit von Oxidationsmitteln elektrochemisch erfolgen. Die elektrochemische Polymerisation erfordert jedoch, dass zunächst ein leitfähiger Film auf der isolierenden Oxidschicht der Metallelektrode abgeschieden wird. Dazu bedarf es dann wiederum einer in-situ Polymerisation mit allen oben aufgeführten Nachteilen. Schließlich muss diese Schicht dann für jede einzelne Metallelektrode elektrisch kontaktiert werden. Diese Kontaktierung ist in der Massenfertigung sehr aufwendig und kann die Oxidschicht beschädigen. Darüber hinaus ist die elektrochemische Abscheidung in den Poren der porösen Metallelektrode sehr schwierig, da die Abscheidung aufgrund des elektrischen Potentialverlaufs primär an den Außenseite des Elektrodenkörpers stattfindet.

Es besteht somit weiterhin Bedarf an neuen und einfacheren Verfahren zur Herstellung von Feststoffelektrolytkondensatoren mit niedrigem Äquivalenten Serienwiderstand (ESR) und niedrigem Reststrom, bei denen keine in-situ Polymerisation erforderlich ist, das Dielektrikum nicht durch Metallionen geschädigt wird und ein thermisch stabilerer Feststoffelektrolyt entsteht.

Die Aufgabe bestand daher darin, ein solches Verfahren und die damit verbesserten Kondensatoren bereitzustellen.

Aufgrund der besseren Verfügbarkeit gegenüber Tantal stieg in den letzten Jahres deutlich das wirtschaftliche Interesse an Niob- und Nioboxidkondensatoren.

Weiterhin nachteilig an chemischen in-situ Verfahren zur Herstellung des Feststoffelektrolyten ist, dass sich damit keine Feststoffelektrolytkondensatoren auf Basis eines Elektrodenmaterials von Niob oder Nioboxid herstellen lassen, die sich durch einen niedrigen Reststrom auszeichnen.

Weiterhin besteht somit Bedarf an Verfahren zur Herstellung von Polymer-Feststoffelektrolytkondensatoren, deren Elektrodenmaterialien auf Niob oder Nioboxid basieren und die einen niedrigen Reststrom und niedrigen ESR aufweisen.

Eine weitere Aufgabe bestand daher darin, ein solches Verfahren zur Herstellung solcher Polymer-Feststoffelektrolytkondensatoren, deren Elektrodenmaterialien auf Niob oder Nioboxid basieren, und die entsprechenden Kondensatoren bereitzustellen.

Überraschend wurde nun gefunden, dass Kondensatoren, deren Feststoffelektrolyt mit Dispersionen, enthaltend Teilchen eines elektrisch leitfähigen Polymers mit einem mittleren Durchmesser von 1-100 nm und einer Leitfähigkeit größer als 10 S/cm, hergestellt wird diese Anforderungen erfüllen.

Gegenstand der vorliegenden Erfindung ist daher ein Verfahren zur Herstellung eines Elektrolytkondensators, wenigstens umfassend, dass

a) auf einen porösen Körper, wenigstens umfassend
einen porösen Elektrodenkörper (2) eines Elektrodenmaterials und ein Dielektrikum (3), das die Oberfläche dieses Elektrodenmaterials bedeckt,
eine Dispersion A) aufgebracht wird,
die wenigstens Teilchen B) eines elektrisch leitfähigen Polymers und ein Dispersionsmittel D) enthält,

b) und zur Bildung eines Feststoffelektrolyten (4), der die Dielektrikumsoberfläche ganz oder teilweise bedeckt, das Dispersionmittel D) wenigstens teilweise entfernt und/oder ausgehärtet wird,

**dadurch gekennzeichnet, dass** die Teilchen B) des leitfähigen Polymers in der Dispersion A) einen mittleren Durchmesser von 1-100 nm haben und Filme hergestellt aus Teilchen B) eine spezifische Leitfähigkeit von größer 10 S/cm aufweisen.

Bei der spezifischen Leitfähigkeit der Filme hergestellt aus Teilchen B) handelt es sich um die spezifische Leitfähigkeit der Filme im getrockneten Zustand.

Überraschend ist, dass die Teilchen B) kleiner als 100 nm sein müssen, um in poröse Elektrodenkörper einzudringen, deren Porendurchmesser größer 500 nm und damit 5fach größer sind als die Teilchen B). Ferner ist überraschend, dass solche kleinen Teilchen B) im Elektrodenkörper einen hinreichend leitfähigen Film ausbilden, da der Widerstand von den Kontaktwiderständen zwischen den Teilchen dominiert wird und mit fallender Größe der Teilchen in der Regel ansteigt.

Die Bestimmung des Durchmessers der Teilchen B) erfolgt Ober eine Ultrazentrifugenmessung. Das allgemeine Vorgehen ist in Colloid Polym. Sci. 267, 1113-1116 (1989) beschrieben. Bei Teilchen B), die in der Dispersion quellen, wird die Teilchengröße im gequollenen Zustand bestimmt Eine Durchmesserverteilung der Teilchen B) bezieht sich auf

eine Massenverteilung der Teilchen in der Dispersion in Abhängigkeit vom Teilchendurchmesser.

Die Teilchen B) des leitfähigen Polymers in der Dispersion A) haben in dem Verfahren bevorzugt einen mittleren Durchmesser von 1 bis 80 nm, besonders bevorzugt von 1 bis 50 nm, ganz besonders bevorzugt von 5 bis 40 nm.

Die Teilchen B) des leitfähigen Polymers in der Dispersion A) haben in dem Verfahren bevorzugt einen $d_{90}$ Wert der Durchmesserverteilung von kleiner 150 nm, besonders bevorzugt kleiner 100 nm, ganz besonders bevorzugt kleiner 80 rim und überaus bevorzugt kleiner 50 nm.

Die Teilchen B) des leitfähigen Polymers in der Dispersion A) haben in dem Verfahren bevorzugt einen $d_{10}$ Wert der Durchmesserverteilung größer 1 nm, besonders bevorzugt größer 3 nm, ganz besonders bevorzugt größer 5nm.

Der $d_{10}$ Wert der Durchmesserverteilung besagt dabei, dass 10% der Gesamtmasse aller Teilchen B) des leitfähigen Polymers in der Dispersion A) solchen Teilchen B) zugeordnet werden kann, die einen Durchmesser kleiner oder gleich dem $d_{10}$ Wert besitzen. Der $d_{90}$ Wert der Durchmesserverteilung besagt, dass 90% der Gesamtmasse aller Teilchen B) des leitfähigen Polymers in der Dispersion A) solchen Teilchen B) zugeordnet werden kann, die einen Durchmesser kleiner oder gleich dem $d_{90}$ Wert besitzen.

Bevorzugt werden Dispersionen A) eingesetzt, deren Filme im getrockneten Zustand eine spezifische Leitfähigkeit von größer 10 S/cm, besonders bevorzugt größer 20 S/cm, ganz besonders bevorzugt größer 50 S/cm, überaus bevorzugt größer 100 S/cm und in einer besonders bevorzugten Ausführungsform größer 200 S/cm aufweisen.

Die Dispersion A) hat in dem Verfahren bevorzugt einen Gehalt an Metall-Kationen kleiner 5000 mg/kg, besonders bevorzugt kleiner 1000 mg/kg, ganz besonders bevorzugt kleiner 200 mg/kg.

Die Dispersion A) hat in dem Verfahren bevorzugt einen Gehalt an Übergangsmetallen kleiner 1000 mg/kg, besonders bevorzugt kleiner 100 mg/kg, ganz besonders bevorzugt kleiner 20 mg/kg.

Die Dispersion A) hat in dem Verfahren bevorzugt einen Eisengehalt kleiner 1000 mg/kg, besonders bevorzugt kleiner 100 mg/kg, ganz besonders bevorzugt kleiner 20 mg/kg.

Die niedrigen Konzentrationen an Metallen in den Dispersionen haben den großen Vorteil, dass das Dielektrikum bei Bildung des Feststoffelektrolyten und im späteren Betrieb des Kondensators nicht geschädigt wird.

Das Elektrodenmaterial bildet im Elektrolytkondensator hergestellte nach dem erfindungsgemäßen Verfahren einen porösen Körper mit großer Oberfläche, und liegt z.B. in Form eines porösen Sinterkörpers oder einer aufgerauten Folie vor. Im Folgenden wird dieser poröse Körper auch kurz als Elektrodenkörper bezeichnet.

Der mit einem Dielektrikum bedeckte Elektrodenkörper wird im Folgenden auch kurz als oxidierter Elektrodenkörper bezeichnet. Die Bezeichnung "oxidierter Elektrodenkörper" umfasst auch solche Elektrodenkörper, die mit einem Dielektrikum bedeckt sind, das nicht durch Oxidation des Elektrodenkörpers hergestellt wurde.

Der mit einem Dielektrikum sowie ganz oder teilweise mit einem Faststoffelektrolyten bedeckte Elektrodenkörper wird im Folgenden auch kurz als Kondensatorkörper bezeichnet.

Unter äußerer Oberfläche des Kondensatorkörpers werden die Außenflächen des Kondensatorkörpers verstanden.

Der Begriff Polymere umfasst im Sinne der Erfindung alle Verbindungen mit mehr als einer gleichen oder unterschiedlichen Wiederholungseinheit.

Unter leitfähigen Polymeren wird hier insbesondere die Verbindungsklasse der π-konjugierten Polymere verstanden, die nach Oxidation oder Reduktion eine elektrische Leitfähigkeit besitzen. Bevorzugt werden solche π-konjugierten Polymere unter leitfähigen Polymeren verstanden, die nach Oxidation elektrische Leitfähigkeit in der Größenordnung von mindestens 1μS $cm^{-1}$ besitzen.

Die Teilchen B) des elektrisch leitfähigen Polymers in der Dispersion A) enthalten bevorzugt wenigstens ein Polythiophen, Polypyrrol oder Polyanilin, die gegebenenfalls substituiert sind.

Besonders bevorzugt enthalten die Teilchen B) des elektrisch leitfähigen Polymers wenigstens ein Polythiophen mit wiederkehrenden Einheiten der allgemeinen Formel (I) oder der allgemeinen Formel (II) oder wiederkehrenden Einheiten der allgemeinen Formeln (I) und (II),

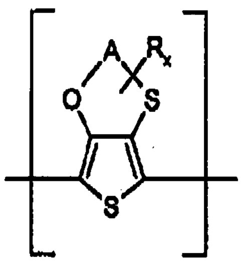
(I)

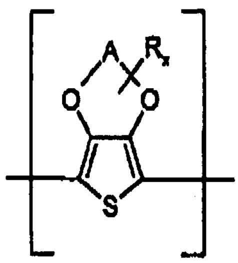
(II)

worin

A für einen gegebenenfalls substituierten $C_1$-$C_5$-Alkylenrest steht,

R für einen linearen oder verzweigten, gegebenenfalls substituierten $C_1$-$C_{18}$-Alkyl- rest, einen gegebenenfalls substituierten $C_5$-$C_{12}$-Cycloalkylrest, einen gegebenen- falls substituierten $C_6$-$C_{14}$-Arylrest einen gegebenenfalls substituierten $C_7$-$C_{18}$- Aralkylrest, einen gegebenenfalls substituierten $C_1$-$C_4$-Hydroxyalkylrest oder einen Hydroxylrest steht,

x für eine ganze Zahl von 0 bis 8 steht und

für den Fall, dass mehrere Reste R an A gebunden sind, diese gleich oder unterschiedlich sein können.

Die allgemeinen Formeln (I) und (II) sind so zu verstehen, dass x Substituenten R an den Alkylenrest A gebunden sein können.

Besonders bevorzugt sind Polythiophene mit wiederkehrenden Einheiten der allgemeinen Formel (I) oder (II) oder wiederkehrenden Einheiten der allgemeinen Formel (I) und (II), worin A für einen gegebenenfalls substituierten $C_2$-$C_3$-Alkylenrest und x für 0 oder 1 steht.

Ganz besonders bevorzugt als leitfähiges Polymer des Feststoffelktrolyten ist Poly(3,4-ethylendioxythiophen), das gegebenenfalls substituiert ist.

Unter dem Präfix Poly- ist im Rahmen der Erfindung zu verstehen, dass mehr als eine gleiche oder verschiedene wiederkehrende Einheit im Polymeren bzw. Polythiophen enthalten ist. Die Polythiophene enthalten insgesamt n wiederkehrende Einheiten der allgemeinen Formel (I) oder der allgemeinen Formel (II) oder der allgemeinen Formeln (I) und (II), wobei n eine ganze Zahl von 2 bis 2000, bevorzugt 2 bis 100, ist. Die wiederkehrenden Einheiten der allgemeinen Formel (I) und/oder (II) können innerhalb eines Polythiophens jeweils gleich oder verschieden sein. Bevorzugt sind Polythiophene mit jeweils gleichen wiederkehrenden Einheiten der allgemeinen Formel(n) (I) oder (II) oder (I) und (II).

An den Endgruppen tragen die Polythiophene bevorzugt jeweils H.

$C_1$-$C_5$-Alkylenreste A sind im Rahmen der Erfindung bevorzugt Methylen, Ethylen, n-Propylen, n-Butylen oder n-Pentylen. $C_1$-$C_{18}$-Alkyl R stehen bevorzugt für lineare oder verzweigte $C_1$-$C_{18}$-Alkylreste wie Methyl, Ethyl, n- oder iso-Propyl, n-, iso-, sec- oder tert-Butyl, n-Pentyl, 1-Methylbutyl, 2-Methylbutyl, 3-Methylbutyl, 1-Ethylpropyl, 1,1-Dimethylpropyl, 1,2-Dimethylpropyl, 2,2-Dimethylpropyl, n-Hexyl, n-Heptyl, n-Octyl, 2-Ethylhexyl, n-Nonyl, n-Decyl, n-Undecyl, n-Dodecyl, n-Tridecyl, n-Tetradecyl, n-Hexadecyl oder n-Octadecyl, $C_5$-$C_{12}$-Cycloakylreste R stehen beispielsweise für Cyclopentyl, Cyclohexyl, Cycloheptyl, Cyclooctyl, Cyclononyl oder Cyclodecyl, $C_5$-$C_{14}$-Arylreste R stehen beispielsweise für Phenyl oder Naphthyl, und $C_7$-$C_{18}$-Aralkylreste R beispielsweise für Benzyl, o-, m-, p-Tolyl, 2,3-, 2,4-, 2,5-, 2,6-, 3,4-, 3,5-Xylyl oder Mesityl. Die vorangehende Aufzählung dient der beispielhaften Erläuterung der Erfindung und ist nicht als abschließend zu betrachten.

Als gegebenenfalls weitere Substituenten der Reste A und/oder der Reste R kommen im Rahmen der Erfindung zahlreiche organische Gruppen in Frage, beispielsweise Alkyl-, Cycloalkyl-, Aryl-, Aralkyl-, Alkoxy, Halogen-, Ether-, Thioether-, Disulfid-, Sulfoxid-, Sulfon-, Sulfonat-, Amino-, Aldehyd-, Keto-, Carbonsäureester-, Carbonsäure-, Carbonat-, Carboxylat-, Cyano-, Alkylsilan- und Alkoxysilangruppen sowie Carboxylamidgruppen.

Als Substituenten für Polyanilin oder Polypyrrol kommen beispielsweise die oben aufgeführten Reste A und R und/oder die weiteren Substituenten der Reste A und R in Frage. Bevorzugt sind unsubstituierte Polyaniline.

Der Rahmen der Erfindung umfasst alle oben stehenden und im Folgenden aufgeführten, allgemeinen oder in Vorzugsbereichen genannten Rastedefinitionen, Parameter und Erläuterungen untereinander, also auch zwischen den jeweiligen Bereichen und Vorzugsbereichen in beliebiger Kombination.

Die als Feststoffelektrolyt in dem bevorzugten Verfahren eingesetzten Polythiophene können neutral oder kationische sein. In bevorzugten Ausführungsformen sind sie kationisch, wobei sich "kationisch" nur auf die Ladungen bezieht, die auf der Polythiophenhauptkette sitzen. Je nach Substituent an den Resten R können die Polythiophene positive und negative Ladungen in der Struktureinheit tragen, wobei sich die positiven Ladungen auf der Polyhiophenhauptkette und die negativen Ladungen gegebenenfalls an den durch Sulfonat- oder Carboxylatgruppen substituierten Resten R befinden. Dabei können die positiven Ladungen der Polythiophenhauptkette zum Teil oder vollständig durch die gegebenenfalls vorhandenen anionischen Gruppen an den Resten R abgesättigt werden. Insgesamt betrachtet können die Polythiophene in diesen Fällen kationisch, neutral oder sogar anionisch sein. Dennoch werden sie im Rahmen der Erfindung alle als kationische Polythiophene betrachtet, da die positiven Ladungen auf der Polythiophenhauptkette maßgeblich sind. Die positiven Ladungen sind in den Formeln nicht dargestellt, da ihre genaue Zahl und Position nicht einwandfrei feststellbar sind. Die Anzahl der positiven Ladungen beträgt jedoch mindestens 1 und höchstens n, wobei n die Gesamtanzahl aller wiederkehrenden Einheiten (gleicher oder unterschiedlicher) innerhalb des Polythiophens ist.

Zur Kompensation der positiven Ladung, soweit dies nicht bereits durch die gegebenenfalls Sulfonat- oder Carboxylat-substituierten und somit negativ geladenen Reste R erfolgt, benötigen die kationischen Polythiophene Anionen als Gegenionen.

Gegenionen können monomere oder polymere Anionen, letztere im Folgenden auch als Polyanionen bezeichnet, sein.

Polymere Anionen sind gegenüber monomeren Anionen bevorzugt, da sie zur Filmbildung beitragen und aufgrund ihrer Größe zu thermisch stabileren elektrisch leitfähigen Filmen führen.

Polymere Anionen können hier beispielsweise Anionen polymerer Carbonsäuren, wie Polyacrylsäuren, Polymethacrylsäure oder Polymaleinsäuren, oder polymerer Sulfonsäuren, wie Polystyrolsulfonsäuren und Polyvinylsulfonsäuren. Diese Polycarbon- und -sulfonsäuren können auch Copolymere von Vinylcarbon- und Vinylsulfonsäuren mit anderen polymerisierbaren Monomeren, wie Acrylsäureestern und Styrol, sein.

Bevorzugt ist in den genannten Teilchen B) als polymeres Anion ein Anion einer polymeren Carbon- oder Sulfonsäure.

Besonders bevorzugt als polymeres Anion ist das Anion der Polystyrolsulfonsäure (PSS).

Das Molekulargewicht der die Polyanionen liefernden Polysäuren beträgt vorzugsweise 1 000 bis 2 000 000, besonders bevorzugt 2 000 bis 500 000. Die Polysäuren oder ihre Alkalisalze sind im Handel erhältlich, z.B. Polystyrolsulfonsäuren und Polyacrylsäuren, oder aber nach bekannten Verfahren herstellbar (siehe z.B. Houben Weyl, Methoden der organischen Chemie, Bd. B 20 Makromolekulare Stoffe, Teil 2, (1987), S. 1141 u.f.).

Polymere(s) Anion(en) und elektrisch leitende Polymere können in der Dispersion A) insbesondere in einem Gewichtsverhältnis von 0,5:1 bis 50:1, bevorzugt von 1:1 bis 30:1, besonders bevorzugt 2:1 bis 20:1 enthalten sein. Das Gewicht der elektrisch leitende Polymere entspricht hierbei der Einwaage der eingesetzten Monomere unter Annahme, dass bei der Polymerisation vollständiger Umsatz erfolgt.

Als monomere Anionen dienen beispielsweise solche von $C_1$-$C_{20}$-Alkansulfonsäuren, wie der Methan-, Ethan-, Propan-, Butan- oder höheren Sulfonsäuren wie der Dodecansulfonsäure, von aliphatischen Perfluorsulfonsäuren, wie der Trifluomethansulfonsäure, der Perfluorbutansulfonsäure oder der Perfluoroctansulfonsäure, von aliphatischen $C_1$-$C_{20}$-Carbonsäuren wie der 2-Ethylhexylcarbonsäure, von aliphatischen Perfluorcarbonsäuren, wie der Trifluoressigsäure oder der Perfluoroctansäure, und von aromatischen, gegebenenfalls durch $C_1$-$C_{20}$-Alkylgruppen substituierten Sulfonsäuren wie der Benzolsulfonsäure, o-Toluolsulfonsäure, p-Toluolsulfonsäure oder der Dodecylbenzolsulfonsäure und von Cycloalkansulfonsäuren wie Camphersulfonsäure oder Tetrafluoroborate, Hexafluorophosphate, Perchlorate, Hexafluoroantimonate, Hexafluorousenate oder Hexachloroantimonate.

Bevorzugt als monomere Anionen sind die Anionen der p-Toluolsulfonsäure, Methansulfonsäure oder Camphersulfonsäure.

Kationische Polythiophene, die zur Ladungskompensation Anionen als Gegenionen enthalten, werden in der Fachwelt auch oft als Polythiophenl(Poly-)Anion-Komplexe bezeichnet.

Die Dispersionen A) können ein oder mehrere Dispersionsmittel D) enthalten. Als Oispersfonsmittel D) seien beispielsweise folgende Lösungsmittel genannt: aliphatische Alkohole wie Methanol, Ethanol, i-Propanol und Butanol; aliphatische Ketone wie Aceton und Methylethylketon; aliphatische Carbonsäureester wie Essigsäureethylester und Essigsäurebutylester; aromatische Kohlenwasserstoffe wie Toluol und Xylol; aliphatische Kohlenwasserstoffe wie Hexan, Heptan und Cyclohexan; Chlorkohlenwasserstoffe wie Dichlormethan und Dichlorethan; aliphatische Nitrile wie Acetonitril, aliphatische Sulfoxide und Sulfone wie Dimethylsulfoxid und Sulfolan; aliphatische Carbonsäureamide wie Methylacetamid, Dimethylacetamid und Dimethylformamid; aliphatische und araliphatische Ether wie Diethylether und Anisol. Weiterhin kann auch Wasser oder ein Gemisch aus Wasser mit den vorgenannten organischen Lösungsmitteln als Dispersionsmittel D) verwendet werden.

Bevorzugte Dispersionsmittel D) sind Wasser oder andere protische Lösungsmittel wie Alkohole, z.B. Methanol, Ethanol, i-Propanol und Butanol, sowie Mischungen von Wasser mit diesen Alkoholen, besonders bevorzugte Lösungsmittel ist Wasser.

Die Dispersion A) kann außerdem weitere Komponenten enthalten wie oberflächenaktive Substanzen, z.B. ionische und nichtionische Tenside oder Haftvermittler enthalten, wie z.B. organofunktionelle Silane bzw. deren Hydrolysate, z.B. 3-Olycidoxypropyltrialkoxysilan, 3-Aminopropyltriethoxysilan, 3-Mercaptopropyl-trimethoxysilan, 3-Metacryloxypropyltrimethoxysilan, Vinyltrimethoxysilan oder Octyltriethoxysilan, Vernetzer wie Melaminverbindungen, verkappte Isocyanate, funktionelle Silane - z.B. Tetraethoxysilan, Alkoxysilanhydrolysate, z.B. auf Basis von Tetraethoxysilan, Epoxysilane wie 3-Glycidoxypropyltrialkoxysilan - Polyurethane, Polyacrylate oder Polyolefindispersionen.

Bevorzugt enthalten die Dispersionen A) weitere Additive, die die Leitfähigkeit steigern, wie z.B. ethergruppenhaltige Verbindungen, wie z.B. Tetrahydofuran, lactongruppenhaltige Verbindungen wie $\gamma$-Butyrolacton, $\gamma$-Valerolacton, amid- oder lactamgruppenhaltige Verbindungen wie Caprolactam, N-Methylcaprolactam, N,N-Dlmethylacetamid, N-Methylacetamid, N,N-Dimethylformamid (DMF), N-Methylfomamid, N-Methylformanilid, N-Methylpyrrolidon (NMP), N-Octylpyrrolidon, Pyrrolidon, Sulfone und Sulfoxide, wie z.B. Sulfolan (Tetramethylensulfon), Dimethylsulfoxid (DMSO), Zucker oder Zuckerderivate, wie z.B. Saccharose, Glucose, Fructose, Lactose, Zuckeralkohole wie z.B. Sorbit, Mannit, Furanderivate, wie z.B. 2- Furancarbonsäure, 3-Furancarbonsäure, und/oder Di- oder Polyalkohole, wie z.B. Ethylenglycol, Glycerin, Di- bzw. Triethylenglycol,. Besonders bevorzugt werden als leitfähigkeitserhöhende Additive Tetrahydrofuran, N-Methylformamid, N-Methylpyrrolidon, Ethylenglycol, Dimethylsulfoxid oder Sorbit eingesetzt.

Die Dispersionen A) können außerdem ein oder mehrere in organischen Lösungsmitteln lösliche organische Bindemittel wie Polyvinylacetat, Polycarbonat, Polyvinylbutyral, Polyacrylsäureester, Polymethacrylsaureester, Polystyrol, Polyacrylnitril, Polyvinylchlorid, Polybutadien, Polyisopren, Polyether, Polyester, Silicone, Styrol/Acrylsäureester-, Vinylacetat/Acrylsäureester- und Ethylen/Vinylacetat-Copolymerisate oder wasserlösliche Bindemittel wie Polyvinylalkohole enthalten.

Die Dispersionen A) können einen pH Wert von 1 bis 14 haben, bevorzugt ist ein pH Wert von 1 bis 8. Für korrosionsempfindliche Dielektrika, wie beispielsweise Aluminiumoxide oder Nioboxide, werden Dispersionen bevorzugt mit einem pH Wert von 4 bis 8, um das Dielektrikum nicht zu schädigen.

Zur Einstellung des pH Werts können den Dispersionen beispielsweise Basen oder Säuren zugesetzt werden. Bevorzugt sind solche Zusätze, die die Filmbildung der Dispersionen nicht beeinträchtigen und bei höheren Temperaturen, z.B. Löttemperaturen, nicht flüchtig sind, sondern unter diesen Bedingungen im Feststoffelektrolyten verbleiben, wie z.B. die Basen 2-Dimethylaminoethanol, 2,2'-Iminodiethanol oder 2,2',2"-Nitrilotriethanol und die Säure Polystyrolsulfonsäure.

Die Viskosität der Dispersion A) kann je nach Aufbringungsart zwischen 0,1 und 500 mPa·s (gemessen bei 20°C und einer Scherrate von 100 $s^{-1}$) betragen. Bevorzugt beträgt die Viskosität 1 bis 200 mPa·s, besonders bevorzugt zwischen 1 bis 100 mPa·s, ganz besonders bevorzugt 3 bis 50 mPa·s.

Fig. 1 beschreibt eine schematische Darstellung des Aufbaus eines Feststoffelektrolytkondensators am Beispiel eines Tantalkundensators mit

1 Kondensatorkörper
5 gegebenenfalls vorhandener leitfähiger Außenschicht
6 Graphit/Silberschicht
7 Drahtkontakt zum Elektrodenkörper 2
8 äußeren Kontakten
9 Verkapselung
10 Bildausschnitt

Fig. 2 beschreibt den vergrößerten Bildausschnitt 10 aus Fig. 1 der den schematischer Schichtaufbau des Tantalkondensators mit

10 Bildausschnitt

2 porösem Elektrodenkörper (Anode)

3 Dielektrikum

4 Feststoffelektrolyt (Kathode)

5 gegebenenfalls vorhandener leitfähiger Außenschicht

6 Graphit/Silberschicht

wiedergibt.

Prinzipiell kann ein solcher erfindungsgemäßer Elekttolytkondensator folgendermaßen hergestellt werden: Zunächst wird z.B. ein Ventilmetall-Pulver mit einer hohen Oberfläche gepresst und zu einem porösen Elektrodenkörper gesintert Hierbei wird üblicherweise ein elektrischer Kontaktdraht bevorzugt aus einem Ventilmetall wie z.B. Tantal mit in den Elektrodenkörper eingepresst. Es können alternativ auch Metallfolien geätzt werden, um eine poröse Folie zu erhalten.

Der Elektrodenkörper wird dann beispielsweise durch elektrochemische Oxidation, mit einem Dielektrikum, d. h. einer Oxidschicht, überzogen. Auf den oxidierten Elektrodenkörper wird daraufhin erfindungsgemäß eine Dispersion A) enthaltend wenigstens Teilchen B) eines elektrisch leitfähigen Polymers und ein Dispersionsmittel D) aufgebracht und zur Bildung des Feststoffelektrolyten das Dispersionsmittel D) wenigstens teilweise entfernt und/oder ausgehärtet. Gegebenenfalls werden weitere Schichten (in Fig. 1 und Fig. 2 mit leitfähiger Außenschicht (5) bezeichnet) auf die äußere Oberfläche des Kondensatorkörpers aufgebracht. Ein Überzug mit gut leitfähigen Schichten, wie Graphit und Silber, oder ein metallischer Kathodenkörper dient als Elektrode zur Ableitung des Stroms. Schließlich wird der Kondensator kontaktiert und eingekapselt.

Weiterhin bevorzugt ist ein Verfahren zur Herstellung von Elektrolytkondensatoren, **dadurch gekennzeichnet, dass** es sich bei dem Elektrodenmaterial um ein Ventilmetall oder um eine Verbindung mit einem Ventilmetall vergleichbaren elektrischen Eigenschaften handelt.

Als Ventilmetall sind im Rahmen der Erfindung solche Metalle zu verstehen, deren Oxidschichten den Stromfluss nicht in beide Richtungen gleichermaßen ermöglichen: Bei anodisch angelegter Spannung sperren die Oxidschichten der Ventilmetalle den Stromfluss, während es bei kathodisch angelegter Spannung zu großen Strömen kommt, die die Oxidschicht zerstören können. Zu den Ventilmetallen zählen Be, Mg, Al, Ge, Si, Sn, Sb, Bi, Ti, Zr, Hf, V, Nb, Ta und W sowie eine Legierung oder Verbindung von wenigstens einem dieser Metalle mit anderen Elementen. Die bekanntesten Vertretern der Ventilmetalle sind Al, Ta, und Nb. Verbindungen einem Ventilmetall vergleichbaren elektrischen Eigenschaften sind solche mit metallischer Leitfähigkeit, welche oxidierbar sind und deren Oxidschichten die vorangehend beschriebenen Eigenschaften besitzen. Beispielsweise besitzt NbO metallische Leitfähigkeit, wird jedoch im Allgemeinen nicht als Ventilmetall betrachtet. Schichten von oxidierten NbO weisen jedoch die typischen Eigenschaften von Ventilmetalloxidschichten auf, so dass NbO oder eine Legierung oder Verbindung von NbO mit anderen Elementen typische Beispiele für solche Verbindungen mit einem Ventilmetall vergleichbaren elektrischen Eigenschaften sind.

Bevorzugt sind Elektrodenmaterialien aus Tantal, Aluminium und solche Elektrodenmaterialien, die auf Niob oder Nioboxid basieren.

Unter Elektrodemnaterialien, die auf Niob oder Nioboxid basieren, werden solche Materialien verstanden, bei denen Niob oder Nioboxid die Komponente mit dem größten Stoffmengenanteil darstellen.

Bei dem Elektrodenmaterial, das auf Niob oder Nioboxid basiert, handelt es sich bevorzugt um Niob, NbO, ein Nioboxid $NbO_x$, wobei x Werte von 0,8 bis 1,2 annehmen kann, Niobnitrid, Nioboxynitrid oder Mischungen dieser Materialien oder um eine Legierung oder Verbindung von wenigstens einem dieser Materialien mit anderen Elementen handelt.

Bevorzugt als Legierungen sind Legierungen mit wenigstens einem Ventilmetall, wie beispielsweise Be, Mg, Al, Ge, Si, Sn, Sb, Bi, Ti, Zr, Hf, V, Nb, Ta oder W.

Demzufolge sind unter dem Begriff "oxidierbares Metall" nicht nur Metalle, sondern auch eine Legierung oder Verbindung eines Metalls mit anderen Elementen gemeint, sofern sie metallische Leitfähigkeit besitzen und oxidierbar sind.

Die oxidierbaren Metalle werden beispielsweise in Pulverform zu einem porösen Elektrodenkörper gesintert oder es wird einem metallischen Körper eine poröse Struktur aufgeprägt, Letzteres kann z.B. durch Ätzen einer Folie erfolgen.

Die porösen Elektrodenkörper werden beispielsweise in einem geeigneten Elektrolyten, wie z.B. Phosphorsäure, durch Anlegen einer Spannung oxidiert. Die Höhe dieser Formierspannung ist abhängig von der zu erzielenden Oxidschichtdicke bzw. der späteren Anwendungsspannung des Kondensators. Bevorzugte Formierspannungen sind 1 bis 300 V, besonders bevorzugt 1 bis 80 V.

Bevorzugt werden zur Herstellung des Elektrodenkörpers Metallpulver mit einer spezifischen Ladung von 1000 bis 1 000000 μC/g, besonders bevorzugt mit einer spezifischen Ladung von 5000 bis 300000 μC/g, ganz besonders bevorzugt mit einer spezifischen Ladung von 5000 bis 150000 μC/g, überaus bevorzugt mit einer spezifischen Ladung von 10000 bis 100000 μC/g.

Die spezifische Ladung berechnet sich dabei wie folgt;

Spezifische Ladung = (Kapazität * Anodisierspannung)/ Gewicht des oxidierten Elektrodenkörpers.

Die Kapazität ergibt sich dabei aus der Kapazität des oxidierten Elektrodenkörpers gemessen bei 120 Hz in einem wässrigen Elektrolyten. Die elektrische Leitfähigkeit des Elektrolyten ist dabei hinreichend groß, so dass es bei 120 Hz noch nicht zu einem Kapazitätsabfall aufgrund des elektrischen Widerstands des Elektrolyten kommt, Beispielsweise werden 18 %ige wässrige Schwefelsäure-Elektrolyte zur Messung eingesetzt.

Die eingesetzten Eloktrodenkörper haben eine Porosität von 10 bis 90 %, bevorzugt von 30 bis 80 %, besonders bevorzugt von 50 bis 80 %.

Die porösen Elektrodenkörper haben einen mittleren Porendurchmesser von 10 bis 10000 nm, bevorzugt von 50 bis 5000 nm, besonders bevorzugt von 100 bis, 3000 nm.

Besonders bevorzugt Gegenstand der vorliegenden Erfindung ist demgemäss ein Verfahren zur Herstellung von Elektrolytkondensatoren, **dadurch gekennzeichnet, dass** es sich bei dem Ventilmetall oder der Verbindung einem Ventilmetall vergleichbaren elektrischen Eigenschaften um Tantal, Niob, Aluminium, Titan, Zirkonium. Hafnium, Vanadium, eine Legierung oder Verbindung von wenigstens einem dieser Metalle mit anderen Elementen, NbO oder eine Legierung oder Verbindung von NbO mit anderen Elementen handelt.

Das Dielektrikum besteht bevorzugt aus einem Oxid des Elektrodenmaterials. Es enthält gegebenenfalls weitere Elemente und/oder Verbindungen.

Die Kapazität des oxidierten Elektrodenkörpers hängt neben der Art des Dielektrikums von der Oberfläche und der Dicke des Dielektrikums ab. Die spezifische Ladung ist ein Maß dafür, wie viel Ladung pro Gewichtseinheit der

oxidierte Elektrodenkörper aufnehmen kann. Die spezifische Ladung berechnet sich wie folgt:

**Spezifische Ladung = (Kapazität * Nennspannung)/ Gewicht des oxidierten Elektrodenkörpers.**

Die Kapazität ergibt sich dabei aus der Kapazität das fertigen Kondensators gemessen bei 120 Hz und die Nennspannung ist die spezifizierte Einsatzspannung des Kondensators (rated voltage). Das Gewicht des oxidierten Elektrodenkörpers bezieht sich auf das reine Gewicht des mit Dielektrikum überzogenen porösen Elektrodenmaterials ohne Polymer, Kontakte und Verkapselungen.

Bevorzugt weisen die nach dem neuen Verfahren hergestellten Elektrolytkondensatoren eine spezifische Ladung von 500 bis 500000 $\mu$C/g, besonders bevorzugt mit einer spezifischen Ladung von 2000 bis 150000 $\mu$C/g, ganz besonders bevorzugt mit einer spezifischen Ladung von 2000 bis 100000 $\mu$C/g, überaus bevorzugt mit einer spezifischen Ladung von 5000 bis 50000 $\mu$C/g.

Als Vorstufen für die Herstellung leitfähiger Polymere der Teilchen B) in der Dispersion, im Folgenden auch als Vorstufen bezeichnet, werden entsprechende Monomere oder deren Derivate verstanden. Es können auch Mischungen von unterschiedlichen Vorstufen verwendet werden. Geeignete monomere Vorstufen sind beispielsweise gegebenenfalls substituierte Thiophene, Pyrrole oder Aniline, bevorzugt gegebenenfalls substituierte Thiophene, besonders bevorzugt gegebenenfalls substituierte 3,4-Alkylendioxythiophene.

Als substituierte 3,4-Alkylendioxythiophene seien beispielhaft die Verbindungen der allgemeinen Formel (III) oder (IV) oder einer Mischung aus Thiophenen der allgemeinen Formeln (III) und (IV),

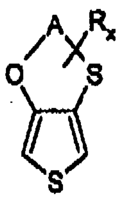 (III) 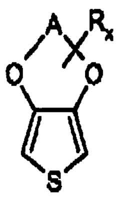 (IV)

aufgeführt,
worin

- A für einen gegebenenfalls substituierten $C_1$-$C_5$-Alkylenrest, bevorzugt für einen gegebenen- falls substituierten $C_2$-$C_3$-Alkylenrest, steht,
- R für einen linearen oder verzweigten, gegebenenfalls substituierten $C_1$-$C_{18}$-Alkylrest, bevor- zugt linearen oder verzweigten, gegebenenfalls substituierten $C_1$-$C_{14}$-Alkylrest, einen ge- gebensnfalls substituierten $C_5$-$C_{12}$-Cycloalkylrest, einen gegebenenfalls substituierten $C_6$- $C_{14}$-Arylrest, einen gegebenenfalls substituierten $C_7$-$C_{18}$-Aralkylrest, einen gegebenenfalls substituierten $C_1$-$C_4$-Hydroxyalkylrest, bevorzugt gegebenenfalls substituierten $C_1$-$C_2$- Hydroxyalkylrest, oder einen Hydroxylrest steht,
- x für eine ganze Zahl von 0 bis 8 steht, bevorzugt von 0 bis 6, besonders bevorzugt für 0 oder 1 steht und

für den Fall, dass mehrere Reste R an A gebunden sind, diese gleich oder unterschiedlich sein können,

Ganz besonders bevorzugte monomere Vorstufen sind gegebenenfalls substituierte 3,4-Ethylendioxythiophene.

Als substituierte 3,4-Ethylendioxythiophene seien beispielhaft die Verbindungen der allgemeinen Formel (V) genannt,

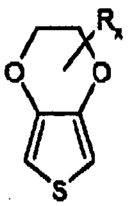

(V)

worin

R und x die für die allgemeine Formeln (III) und (IV) genannte Bedeutung haben.

Unter Derivaten dieser monomeren Vorstufen werden im Sinne der Erfindung beispielsweise Dimere oder Trimere dieser monomeren Vorstufen verstanden. Es sind auch höhermolekulare Derivate, d.h. Tetramere, Pentamere etc. der monomeren Vorstufen als Derivate möglich.

Als Derivate substituierter 3,4-Alkylendioxythiophene seien beispielhaft die Verbindungen der allgemeinen Formel (VI) genannt,

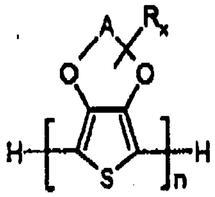

(VI)

worin

n für eine ganze Zahl von 2 bis 20, bevorzugt 2 bis 6, besonders bevorzugt für 2 oder 3 steht, und

A, R und x die für die allgemeine Formeln (III) und (IV) genannte Bedeutung haben.

Die Derivate können sowohl aus gleichen wie unterschiedlichen Monomereinheiten aufgebaut sein und in reiner Form sowie im Gemisch untereinander und/oder mit den monomeren Vorstufen eingesetzt werden. Auch oxidierte oder reduzierte Formen dieser Vorstufen sind im Sinne der Erfindung von dem Begriff "Vorstufen" umfasst, sofern bei ihrer Polymerisation die gleichen leitfähigen Polymeren entstehen wie bei den vorangehend aufgeführten Vorstufen.

Als Substituenten für die oben genannten Vorstufen, insbesondere für die Thiophene, bevorzugt für die 3,4-Alkytendioxythiophene kommen die für die allgemeine Formeln (III) und (IV) für R genannten Reste in Frage.

Als Substituenten für Pyrrole und Aniline kommen beispielsweise die oben aufgeführten Reste A und R und/ oder die weiteren Substituenten der Reste A und R in Frage.

Als gegebenenfalls weitere Substituenten der Reste A und/oder der Reste R kommen die im Zusammenhang mit den allgemeinen Formeln (I) und (II) genannten organischen Gruppen in Frage.

Verfahren zur Herstellung der monomeren Vorstufen für die Herstellung leitfähiger Polymere sowie deren Derivaten sind dem Fachmann bekannt und beispielsweise in L Groenendaal, F. Jonas, D. Freitag, H. Pielartzik & J. R. Reynolds, Adv. Mater. 12 (2000) 481-494 und darin zitierter Literatur beschrieben.

Die für die Herstellung der zu verwendenden Polythlophene erforderlichen 3,4-Akylenoxythiathiophene der Formel (III) sind dem Fachmann bekannt oder nach bekannten Verfahren herstellbar (beispielsweise gemäß P. Blanchard, A. Cappon, E. Levillain, Y. Nicolas, P. Frère und 1. Roncali, Org. Lett. 4 (4), 2002, S. 607 - 609).

Die Herstellung der Dispersionen erfolgt aus den oben beschriebenen Vorstufen beispielsweise analog zu den in EP-A 440 957 (US 5,300,575) genannten Bedingungen. Eine verbesserte Variante für die Herstellung der Dispersionen stellt der Einsatz von Ionentauscher zur Entfernung des anorganischen Salzgehaltes oder eines Teils davon dar. Eine solche Variante ist beispielsweise in DE-A 19627071 (US 6,376,105) beschrieben. Der Ionentauscher kann beispielsweise mit dem Produkt verrührt werden oder das Produkt wird über eine mit Ionenaustauschersäule gefüllt Säule gefördert. Durch die Verwendung des Ionenaustauschers können beispielsweise die oben beschriebenen niedrigen Metallgehalte erzielt werden.

Die Teilchengröße der Teilchen B) in der Dispersion A) kann nach der Entsalzung beispielsweise mittels eines

Hochdruckhomogenisators verringert werden. Dieser Vorgang kann auch wiederholt werden um den Effekt zu vergrößern. Besonders hohe Drücke zwischen 100 und 2000 bar haben sich als vorteilhaft erwiesen, um die Teilchengröße stark zu reduzieren.

Auch eine Herstellung des Polyanilin/Polyanion- oder Polythiophen/Polyanion-Komplexes und anschließende Dispergierung oder Redispergierung in einem oder mehreren Lösungsminel(n) ist möglich.

Der Feststoffanteil der Teilchen B) des elektrisch leitfähigen Polymers in der Dispersion A) beträgt 0,1 - 90 Gew.-%, bevorzugt 0,5 - 30 Gew.-% und ganz besonders bevorzugt 0.5 -10 Gew.-%.

Die Teilchen B) des leitfähigen Polymers bilden bevorzugt eine stabile Dispersion. Es können jedoch auch instabile Dispersionen verwendet werden, in dem diese vor Gebrauch beispielsweise gerührt, gerollt oder aufgeschüttelt werden, um eine gleichmäßige Verteilung der Teilchen B) zu gewährleisten.

Die Dispersionen A) werden nach bekannten Verfahren, z.B. durch Spincoating, Tränkung, Gießen, Auftropfen, Spritzen, Aufsprühen, Aufrakeln, Bestreichen oder Bedrucken, beispielsweise Ink-jet-, Sieb- oder Tampondrucken, auf das Dielektrikum des Elektrodenkörpers aufgebracht. Das Eindringen der Dispersion in den porösen Elektrodenkörper kann beispielsweise durch Über- oder Unterdruck, Vibration, Ultraschall oder Wärme erleichtert werden.

Die Aufbringung kann direkt oder unter Verwendung eines Haftvermittlers, beispielsweise eines Silans, wie z.B. organofunktionelle Silane bzw. deren Hydrolysate, z.B. 3-Glycidoxypropyltrialkoxysilan, 3-Aminopropyltriethoxysilan, 3-Mercaptopropyltrimethoxysilan, 3-Metacryloxypropyltrimethoxysilan, Vinyltri-methoxysilan oder Ootyltriethoxysilan, und/oder einer oder mehrerer anderer funktionellen Schichten auf das Dielektrikum des Elektrodenkörpers erfolgen.

Nach dem Aufbringen der Dispersion A) wird das Dispersionsmittel D) vorzugsweise entfernt, damit sich aus den Teilchen B) und gegebenenfalls weiteren Additiven in der Dispersion der Feststoffelektrolyt ausbilden kann. Es kann aber auch mindestens ein Teil des Dispersionsmittels D) im Feststoffelektrolyten verbleiben. Je nach Art des Dispersionsmittels D) kann dieses auch sowohl vollständig als auch nur der nach teilweiser Entfernung noch verbleibende Teil ausgehärtet werden.

Das Entfernen des Dispersionsmittels D) nach dem Aufbringen der Dispersion kann durch einfaches Verdampfen bei Raumtemperatur erfolgen. Zur Erzielung höherer Verarbeitungsgeschwindigkeiten ist es jedoch vorteilhafter, die Dispersionsmittel D) bei erhöhten Temperaturen, z.B. bei Temperaturen von 20 bis zu 300°C, bevorzugt 40 bis zu 250°C, zu entfernen. Eine thermische Nachbehandlung kann unmittelbar mit dem Entfernen des Lösungsmittel verbunden oder aber auch in zeitlichem Abstand von der Fertigstellung der Beschichtung vorgenommen werden.

Die Dauer der Wärmebehandlung beträgt in Abhängigkeit von der Art des für die Beschichtung verwendeten Dispersion 5 Sekunden bis mehrere Stunden. Für die thermische Behandlung können auch Temperaturprofile mit unterschiedlichen Temperaturen und Verweilzeiten eingesetzt werden.

Die Wärmebehandlung kann z.B. in der Weise ausgeführt werden, dass man die beschichteten oxidierten Elektrodenkörper mit einer solchen Geschwindigkeit durch eine auf der gewünschten Temperatur befindliche Wärmekammer bewegt, dass die gewünschte Verweilzeit bei der gewählten Temperatur erreicht wird, oder mit einer auf der gewünschten Temperatur befindlichen Heizplatte für die gewünschte Verweilzeit in Kontakt bringt. Des Weiteren kann die Wärmebehandlung beispielsweise in einem Wärmeofen oder mehreren Wärmeöfen mit jeweils unterschiedlichen Temperaturen erfolgen.

Für metalloxidische Dielektrika, wie beispielsweise die Oxide der Ventilmetalle, kann es nach Bildung des Feststoffelektrolyten vorteilhaft sein, den Oxidfilm elektrochemisch nachzubilden, um eventuelle Fehlstellen im Oxidfilm auszubessern und dadurch den Reststrom des fertigen Kondensators zu senken. Bei dieser sogenannten Reformierung taucht man den Kondensatorkörper in einen Elektrolyten ein und legt eine positive Spannung an den Elektrodonkörper. Der fließende Strom bildet das Oxid an defekten Stellen im Oxidfilm nach bzw. zerstört leitfähiges Polymer an Fehlstellen, über die ein hoher Strom fließt.

Je nach Art des oxidierten Elektrodenkörpers kann es vorteilhaft sein, den oxidierten Elektrodenkörper weitere Male mit den Dispersionen zu imprägnieren, um dickere Polymerschichten und/oder eine größere Bedeckung der Dielektrikumsoberfläche zu erzielen.

Bevorzugt erfolgt das Aufbringen der Dispersion A) und das wenigstens teilweise Entfernen und/oder Aushärten des Dispersionsmittels D) mehrfach.

Zwischen a) dem Aufbringen der Dispersion und b) dem wenigstens teilweisen Entfernen und/oder Aushärten des Dispersionsmittels D) können gegebenenfalls weitere Schritte erfolgen.

Als gegebenenfalls weitere Schritte können beispielsweise ein Teil der Dispersion wieder vom oxidierten Elektrodenkörper entfernt werden, ein weitere Tränkung mit der gleichen oder einer anderen Dispersion erfolgen, eine Spülung mit gleichen oder anderen Lösungsmitteln enthaltend gegebenenfalls Additive durchgeführt werden oder eine Lagerung erfolgen.

Überraschend wurde gefunden, dass ein Entfernen der Dispersion von der äußeren Oberfläche des oxidierten Elektrodenkörpers nach dem Aufbringen und vor dem Trocknen, insbesondere bei mehrmaligen Tränkungs- und Trocknungszyklen, zu einer höheren Bedeckung und einem niedrigeren ESR führt.

Bevorzugt ist demnach ein Verfahren, bei dem nach Aufbringen der Dispersion A) die Teilchen B) des leitfähigen

Polymers, die sich auf der äußeren Oberfläche des Elektrodenkörpers befinden, wenigstens teilweise, besonders bevorzugt möglichst weitgehend entfernt werden. Dies kann z.B. durch Abspülen, Abtupfen, Abblasen, Abschleudern oder ähnliches erfolgen. Auch der Einsatz von beispielsweise Ultraschall, Wärme oder Strahlung zur Entfernung des äußeren Polymerfilms ist möglich. Bevorzugt ist ein Spülen mit Lösungsmittel, bevorzugt mit dem Lösungsmittel, das als Dispersionsmittel verwendet wird.

Die Teilchen B) des leitfähigen Polymers können aber auch nach dem wenigstens teilweisen Entfernen und/oder Aushärten des Dispersionsmittels D) von der äußeren Oberfläche des Elektrodenkörpers entfernt werden, beispielsweise durch Ultraschall, Laserstrahlung, Lösungsmittel oder mechanischem Ablösen.

Die Bedeckung des Dielektrikums mit dem Feststoffelektrolyten kann folgendermaßen bestimmt werden: Die Kapazität des Kondensators wird im trockenen und feuchten Zustand bei 120 Hz gemessen. Der Bedeckungsgrad ist das Verhältnis der Kapazität im trockenen Zustand zu der Kapazität im feuchten Zustand ausgedrückt in Prozent. Trockener Zustand bedeutet, dass der Kondensator über mehrere Stunden bei erhöhter Temperatur (80-120°C) getrocknet wurde, bevor er vermessen wird. Feuchter Zustand bedeutet, dass der Kondensator über mehrere Stunden einer gesättigten Luftfeuchte bei erhöhtem Druck, beispielsweise in einem Dampfdruckkessel, ausgesetzt wird. Die Feuchtigkeit dringt dabei in Poren ein, die vom Feststoffelektrolyten nicht bedeckt sind, und wirkt dort als Flüssigelektrolyt.

Die Bedeckung des Dielektrikums durch den Feststoffelektrolyten ist vorzugsweise größer als 50 %, besonders bevorzugt größer als 70 %, ganz besonders bevorzugt größer als 80 %.

Nach Herstellung des Feststoffelektrolyten können auf dem Kondensatorkörper weitere leitfähige Schichten, wie z.B. eine leitfähige Außenschicht aufgebracht werden. Bevorzugt wird eine polymere Außenschicht, beispielsweise wie in der europäischen Patentanmeldung EP-A 1 524 678 (US 6,981,663) beschrieben, aufgebracht. Weitere gut leitfähige Schichten wie beispielsweise Graphit- und/oder Silberschichten dienen als Stromkollektor. Abschließend wird der Kondensator kontaktiert und verkapselt.

Das erfindungsgemäße Verfahren ermöglicht somit die Herstellung von Feststoffelektrolytkondensatoren mit niedrigem Äquivalenten Serienwiderstand (ESR) und niedrigem Reststrom, bei denen keine in-situ Polymerisation erforderlich ist, das Dielektrikum nicht durch Metallionen geschädigt wird und ein thermisch stabilerer Feststoffelektrolyt entsteht als bei bekannten Verfahren. Zudem ermöglicht das erfindungsgemäße Verfahren auch die Herstellung von Polymer-Feststoffelektrolytkondensatoren, deren Elektrodenmaterialien auf Niob oder Nioboxid basieren und die einen niedrigen Reststrom und niedrigen ESR aufweisen, deren Herstellung mittels in-situ Polymerisation des Feststoffelektrolyten bisher nicht möglich war.

Die erfindungsemäß hergestellten Elektrolytkondensatoren eignen sich aufgrund ihres niedrigen Reststroms und ihres niedrigen ESR hervorragend zur Verwendung als Bauteil in elektronischen Schaltungen, beispielsweise als Glättungskondensator (filter capacitor) oder Entstörkondensator (decoupling capacitor). Die Verwendung ist auch Gegenstand der Erfindung. Bevorzugt sind elektronische Schaltungen, wie sie sich beispielsweise in Computern (Desktop, Laptop, Server), in Computerperipheriegeräten (z.B. PC Karten), in tragbaren elektronischen Geräten, wie z.B. Mobiltelefonen, Digitalkameras oder Unterhaltungselektronik, in Geräten der Unterhaltungselektronik, wie z.B. in CD/DVD Spielern und Computerspielkonsolen, in Navigationssystemen, in Telekommunikationseinrichtungen, in Haushaltsgeräten, in Spannungsversorgungen oder in der Automobilelektronik befinden.

Die folgenden Beispiele dienen der beispielhaften Erläuterung der Erfindung und sind nicht als Beschränkung aufzufassen.

## Beispiele

### Beispiel 1:

In einem 21 Dreihalskolben mit Rührer und Innenthermometer wurden 868 g entionisiertes Wasser, 330 g einer wässrigen Polystyrolsulfonsäurelösung mit einem mittleren Molekulargewicht von 70000 und einem Feststoffgehalt von 3,8 Gew.-% vorgelegt. Die Reaktionstemperatur wurde zwischen 20 und 25°C gehalten, Unter Rühren wurden 5,1 g 3,4-Ethylendioxythiophen zugegeben. Die Lösung wurde 30 Minuten gerührt. Anschließend wurden 0,03 g Eisen(II)-sulfat und 9,5 g Natriumpersulfat zugegeben und die Lösung weitere 24 h gerührt.

Nach Abschluss der Reaktion wurden zur Entfernung anorganischer Salze 100 mi eines stark sauren Kationenaustauschers und 250 ml eines schwach basischen Anionenaustauschers zugegeben und die Lösung weitere 2 h gerührt. Der Ionenauschtauscher wurde abfiltriert. Die Poly(3,4-ethylendioxythiophen)/Polystyrolsulfonat-Dispersion wurde zehnmal bei einem Druck von 700 bar mit einem Hochdruokhomogenisator homogenisiert. Anschließend wird die Dispersion auf einen Feststoffgehalt von 1,6 % aufkonzentriert.

Die so hergestellte Dispersion A)-1 wies folgende Teilchengrößenverteilung auf:

$d_{10}$ 19 nm

(fortgesetzt)

| | |
|---|---|
| $d_{50}$ | 26 nm |
| $d_{90}$ | 40 nm |

Der Durchmesser der Teilchen B) des leitfähigen Polymers bezieht sich auf eine Massenverteilung der Teilchen B) in der Dispersion in Abhängigkeit vom Teilchendurchmesser. Die Bestimmung erfolgte über eine Ultrazentrifugenmessung. Die Teilchengröße wurde im gequollenen Zustand der Teilchen bestimmt.

Die Viskosität der Dispersion betrug 26 mPa*s bei einer Scherrate von 100 Hz und 20°C. Eine ICP-Analyse der Metallgehalte der Dispersion A)-1 ergab folgende Werte:

| | |
|---|---|
| Natrium (Na): | 110 mg/kg |
| Magnesium (Mg): | 0,58 mg/kg |
| Aluminium (Al): | 1,0 mg/kg |
| silicium (Si): | 1,2 mg/kg |
| Phosphor (P): | 5,9 mg/kg |
| Kalium (K): | 0,53 mg/kg |
| Calcium (Ca): | 3,9 mg/kg |
| Chrom (Cr): | 0,16 mg/kg |
| Eisen (Fe): | 0,89 mg/kg |
| Zink (Zn): | <0,01 mg/kg |

**Beispiel 2:**

100 g der Dispersion A)-1 aus Beispiel 1 wurden 5 g Dimethylsufoxid (DMSO) zugesetzt und zu einer Dispersion A)-2 verrührt. Ein Teil dieser Dispersion A)-2 wurde auf einen Glasobjektträger (26 mm*26 mm*1 mm) mittels eines Spincoaters (Chemat Technology KW-4A) bei 1000 U/min für 5 Sekunden aufgeschleudert. Die Probe wurde 10 min bei 120°C getrocknet. Anschließend wurden zwei gegenüberliegende Kanten des Objektträgers mit Leitsilber beschichtet. Nach Trocknung des Leitsilbers wurden die beiden Silberstreifen kontaktiert und mit einem Keithley 199 Multimeter der Oberflächenwiderstand ermittelt. Die Schichtdicke wurde mit einem Tencor Alpha Step 500 Surface Profiler bestimmt. Aus Oberflächenwiderstand und Schichtdicke d wurde die spezifische Leitfähigkeit $\sigma$ nach $a = 1/(R_o * d)$ ermittelt, Die Schichtdicke betrug 120 nm und die spezifische Leitfähigkeit 483 S/cm.

Beispiel 3:

3.1. Herstellung von oxidierten Elektrodenkörpern:

Tantalpulver mit einer spezifischen Kapazität von 50 000 μFV/g wurde unter Einschluss eines Tantaldrahtes 7 zu Pellets gepresst und gesintert, um einen mit den Abmessungen 4,2 mm * 3 mm* 1 mm zu bilden. Die porösen Elektrodenkörper (2) hatten einen mittleren Porendurchmesser von 580 nm und wurden zur Bildung eines Dielektrikums in einem Phosphorsäureelektrotyten auf 34 V anodisiert.

3.2 Herstellung des Feststoffelektrolyten mit dem erfindungsgemäßen Verfahren

100 g der Dispersion A)-1 aus Beispiel 1,4g Dimethylsufoxid (DMSO) und 0,5 g 3-Glycidoxypropyltrimethoxysilan (Silquest A-187, OSi Specialties) wurden in einem Becherglas mit Rührer intensiv zu einer Dispersion A)-3 gemischt.

Die oxidierten Elektrodenkörper wurden in dieser Dispersion A)-31 min getränkt. Anschließend wurden die getränkten Elektrodenkörper unter fließendem Wasser abgespült, um die Dispersion A)-3 auf den Außenseiten des Elektrodenkörpers zu entfernen. Danach erfolgte eine Trocknung bei 120°C für 10 min. Tränkung, Spülung und Trocknung wurden neun weitere Male durchgeführt.

3.3 Herstellung einer polymeren Außenschicht

a) Herstellung einer Dispersion A)-4:

In einem 21 Dreihalskolben mit Rührer und Innenthermometer wurden 868 g entionisiertes Wasser, 330 g einer

wässrigen Polystyrolsulfonsäurelösung mit einem mittleren Molekulargewicht von 70000 und einem Feststoffgehalt von 3,8 Gew.-% vorgelegt. Die Reaktionstemperatur wurde zwischen 20 und 25°C gehalten. Unter Rühren wurden 5,1 g 3,4-Ethylendioxythiophen zugegeben. Die Lösung wurde 30 Minuten gerührt. Anschließend wurden 0,03 g Eisen(III)-sulfat und 9,5 g Natriumpersulfat zugegeben und die Lösung weitere 24 h gerührt.

Nach Abschluss der Reaktion wurden zur Entfernung anorganischer Salze 100 ml eines stark sauren Kationenaustauschers und 250 ml eines schwach basischen Anionenaustauschers zugegeben und die Lösung weitere 2 h gerührt. Der Ionenauschtauscher wurde abfiltriert.

b) Herstellung eines PEDT/Toluolsulfonat-Pulvers:

In einem 51-Glasreaktor mit Rührer und Thermometer wurden 2,51 demineralisiertes Wasser vorgelegt. Unter Rühren wurden 214,2 g p-Toluolsufonsäure-monohydrat und 2,25 g Eisen(III)sulfatheptahydrat eingetragen. Nachdem sich alles gelöst hatte, wurden 85,8 g 3,4-Ethylendioxythiophen zugegeben und 30 Minuten gerührt. Anschließend wurden 192,9 g Natriumperoxodisulfat unter Rühren eingetragen und die Mischung weitere 24 Stunden bei Raumtemperatur gerührt. Nach Reaktionsende wurde das entstandene PEDT/Toluolsulfonat-Pulver auf einer Porzellannutsche abfiltriert mit 31 demineralisiertem Wasser gewaschen und zuletzt 6 Stunden bei 100°C getrocknet. Man erhielt 89 g eines blauschwarzen PEDT-Toluolsufonat-Pulvers.

In einem Becherglas mit Rührer wurden 180 g der PEDT/PSS-Dispersion A)-4, 10 g eines Sulfopolyesters (Eastek 1100, Eastman), 8 g Dimethylsulfoxid, 1 g 3-Glycidoxypropyltrimethoxysilan (Silquest A-187, OSi Specialties) und 0,4 g Netzmittel (Dynol 604, Air Products) eine Stunde intensiv gemischt. Anschließend wurden 2 g des PEDT/Toluolsulfonat-Pulvers mittels einer Perlmühle-Dissolver-Einheit eindispergiert. Dazu wurden 300 g Zirkonoxidperlen (∅ 1 mm) zugegeben und die Mischung 1 Stunde unter Kühlung mit Wasser bei 7000U/min gerührt. Zuletzt wurden die Mahlperlen über ein 0,8 µm Sieb abgetrennt. Diese erhaltene Dispersion A)-5 wies einen Feststoffgehalt von 4,7 % auf.

Die Kondensatorkörper aus 3.2 wurden in dieser Dispersion A)-5 getränkt und anschließend 10 min bei 120°C getrocknet.

Abschließend wurden die Elektrodenkörper mit einer Graphit und Silberschicht überzogen.

Die auf die vorangehende Weise gefertigten 18 Kondensatoren hatten im Mittel folgende elektrischen Werte:

| | |
|---|---|
| Kapazität: | 84,3 µF |
| ESR: | 22.4 mΩ |
| Reststrom : | 0.16 µA |

Die Kapazität wurde bei 120 Hz und der äquivalente Serienwiderstand (ESR) bei 100 kHz mittels eines LCR Meters (Agilent 4284A) bestimmt. Der Reststrom wurde drei Minuten nach Anlegen einer 10 V Spannung mit einem Keithley 199 Multimeter bestimmt.

**Vergleichsbeispiel 1:**

Es wurde eine Dispersion analog zu Beispiel 1 hergestellt, jedoch ohne eine anschließende Homogenisierung.

Die so hergestellte Dispersion A)-6 hatte eine folgende Teilrhangrößenverteilung:

| | |
|---|---|
| $d_{10}$ | 60 nm |
| $d_{50}$ | 147 nm |
| $d_{90}$ | 244 nm |

Analog zu Beispiel 3 wurden 9 Kondensatoren gefertigt, wobei zur Bildung des Feststoffelektrolyten jedoch folgende Dispersion A)-7 verwendet wurde:

> 100 g der Dispersion A)-6, 4 g Dimethylsulfoxid (DMSO) und 0,5 g 3-Glycidoxypropyltrimethoxysilan (Silquest A-187, OSi Specialties) wurden in einem Becherglas mit Rührer intensiv zu einer Dispersion A)-7 gemischt.

Die 9 gefertigten Kondensatoren hatten im Mittel folgende elektrischen Werte:

| | |
|---|---|
| Kapazität: | 2,8 µF |
| ESR: | 123,6 mΩ |
| Reststrom : | 0,24 µA |

Die Kapazität wurde bei 120 Hz und der äquivalente Serienwiderstand (ESR) bei 100 kHz mittels eines LCR Meters (Agilent 4284A) bestimmt. Der Reststrom wurde drei Minuten nach Anlegen einer 10 V Spannung mit einem Keithley 199 Multimeter bestimmt.

Die Kapazität dieser Kondensatoren beträgt nur ca. 3% der Kapazität in Beispiel 3. Daraus kann geschlossen werden, dass die leitfähigen Teilchen aus der Dispersion A)-7 im Vergleichsbeispiel nicht hinreichend in die Poren des Elektrodenkörpers eindringen, obwohl der mittlere Teilchendurchmesser (147 nm) deutlich kleiner als der mittlere Porendurchmesser (580 nm) der Elektrodenkörper ist.

**<u>Vergleichsbeispiel 2:</u>**

18 anodisierte Elektrodenkörper wurden analog zu Beispiel 3.1 hergestellt. Diese Elektrodenkörper wurden mittels einer chemischen in-situ Polymerisation mit einem Feststoffelektrolyten versehen.

Dazu wurde eine Lösung, bestehend aus einem Gewichtsteil 3,4-Ethylendioxythiophen (BAYTRON® M, H.C. Starck GmbH) und 20 Gewichtsteilen einer 40 Gew.-%igen ethanolischen Lösung von Eisen(III)-p-toluolsulfonat (BAYTRON® C-E, H.C. Starck GmbH) hergestellt.

Die Lösung wurde zur Imprägnierung der 18 anodisierten Elektrodenkörper 2 verwendet. Die Elektrodenkörper 2 wurden in dieser Lösung getränkt und anschließend für 30 min bei Raumtemperatur (20°C) getrocknet, Danach wurden sie 30 min bei 50°C in einem Trockenschrank wärmebehandelt. Anschließend wurden die Elektrodenkörper in einer 2 Gew.-%igen wässrigen Lösung von p-Toluolsulfonsäure 60 min lang gewaschen. Die Elektrodenkörper wurden 30 min in einer 0,25 Gew.-% wässrigen Lösung von p-Toluolsulfonsäure reformiert, anschließend in destilliertem Wasser gespült und getrocknet. Die beschriebene Tränkung, Trocknung, Temperaturbehandlung und Reformierung wurde mit denselben Elektrodenkörpern noch zwei weitere Male durchgeführt.

Anschließend wurden die Kondensatorkörper analog zu Beispiel 3.3 mit einer polymeren Außenschicht versehen. Abschließend wurden die Elektrodenkörper mit einer Graphit und Silberschicht überzogen.

Die 18 gefertigten Kondensatoren hatten im Mittel folgende elektrischen Werte:

| | |
|---|---|
| Kapazität: | 83,0 µF |
| ESR: | 23,1 mΩ |
| Reststrom : | 4,85 µA |

Die Kapazität wurde bei 120 Hz und der äquivalente Serienwiderstand (ESR) bei 100 kHz mittels eines LCR Meters (Agilent 4284A) bestimmt. Der Reststrom wurde drei Minuten nach Anlegen einer 10 V Spannung mit einem Keithley 199 Multimeter bestimmt.

Mit dem erfindungsgemäßen Verfahren (Beispiel 3) werden gleiche Kapazitäten und ESR-Werte erreicht. Das erfindungsgemäße Verfahren zur Bildung des Feststoffelektrolyten dauert jedoch nur 2h, bedarf keiner chemischen Reaktion und basiert auf wässrigen Dispersionen. Das chemische in-situ Verfahren dauert dahingegen ca. 9 h und es müssen explosionsgefährliche Lösungen gehandhabt werden. Trotz intensiver Waschung lassen sich bei dem ih-situ Verfahren nicht alle Eisensalze entfernen. Dies führt im Gegensatz zu dem nahezu metallfreien erfindungsgemäßen Verfahren zu einem deutlich höheren Reststrom im Verglolcbsbeispiel.

**<u>Beispiel 4:</u>**

<u>4.1. Herstellung von oxidierten Elektrodenkörpern:</u>

Tantalpulver mit einer spezifischen Kapazität von 150 000 µFV/g wurde unter Einschluss eines Tantaldrahtes 7 zu Pellets gepresst und gesintert, um einen mit den Abmessungen 1,7 mm * 1,1 mm* 1,1 mm zu bilden. Die porösen Elektrodenkörper 2 hatten einen mittleren Porendurchmesser von 190 nm und wurden zur Bildung eines Dielektrikums in einem Phosphorsäureelektrolyten auf 12 V anodisiert.

**<u>4.2 Herstellung des Feslstoffelektrolyten mit dem erfindungsgemäßen Verfahren</u>**

100 g der Dispersion A)-1 aus Beispiel. 1, 4 g Dimethylsulfoxid (DMSO) und 0,5 g 3-Glycidoxypropyltrimethoxysilan (Silquest A-187, OSi Specialties) wurden in einem Becherglas mit Rührer intensiv zu einer Dispersion A)-8 gemischt.

Die oxidierten Elektrodenkörper wurden in dieser Dispersion A)-8 1 min getränkt. Anschließend wurden die getränkten Elektrodenkörper unter fließendem Wasser abgespült, um die Dispersion A)-8 auf den Außenseiten des Elektrodenkörpers zu entfernen. Danach erfolgte eine Trocknung bei 120°C für 10 min. Tränkung, Spülung und Trocknung

wurden neun weitere Male durchgeführt.

4.3. Herstellung einer polymeren Außenschicht

In einem 2 1 Dreihalskolben mit Rührer und Innenthermomoter werden 868 g entionisiertes Wasser, 330 g einer wässrigen Polystyrolsulfansäurelösung mit einem mittleren Molekulargewicht von 70000 und einem Feststoffgehalt von 3,8 Gew.-% vorgelegt. Die Reaktionstemperatur wurde zwischen 20 und 25°C gehalten.

Unter Rühren wunden 5,1 g 3,4-Ethylendiexythiophen zugegeben. Die Lösung wurde 30 Minuten gerührt. Anschließend wurden 0,03 g Eisen(III)-sulfat und 9,5 g Natriumpersulfat zugegeben und die Lösung weitere 24 h gerührt.

Nach Abschluss der Reaktion wurden zur Entfernung anorganischer Salze 100 ml eines starksauren Kationenaustauschers und 250 ml eines schwachbasischen Anionenaustauschers zugegeben und die Lösung weitere 2 h gerührt, Der Ionenauschtauscher wurde abfiltriert.

In einem Becherglas mit Rührer wurden 180 g dieser PEDT/PSS-Dispersion, 5 g eines Sulfopolyesters (Eastek 1100, Eastman), 8 g Dimethylsulfoxid, 1 g 3-Glycidoxypropyltrimethoxysilan (Silquest A-187, OSi Specialties) und 0,4 g Netzmittel (Dynol 604, Air Products) eine Stunde intensiv zu einer Dispersion A)-9 gemischt.

Die Kondensatorkörper wurden in dieser Dispersion A)-9 getränkt und anschließend 10 min bei 120°C getrocknet. Tränkung und Trocknung wurde ein weiteres Mal wiederholt.

Abschließend wurden die laektrodenkörper mit einer Graphit und Silberschicht überzogen.

Die 9 gefertigten Kondensatoren hatten im Mittel folgende elektrischen Werte:

| | |
|---|---|
| Kapazität: | 64,2 μF |
| ESR: | 63,3 mΩ |
| Reststrom: | 2,6 μA |

Die Kapazität wurde bei 120 Hz und der äquivalente Serienwiderstand (ESR) bei 100 kHz mittels eines LCR Meters (Agilent 4284A) bestimmt Der Reststrom wurde drei Minuten nach Anlegen einer 4 V Spannung mit einem Keithley 199 Multimeter bestimmt.

**Beispiel 5:**

100g der Dispersion A)-1 aus Beispiel 1, 4 g Dimethylsulfoxid (DMSO) und 0,5 g 3-Glycidoxypropyltrimethoxysilan (Silquest A-187, OSi Specialties) wurden in einem Becherglas mit Rührer intensiv zu einer Dispersion gemischt. Anschließend wurde der pH-Wert dieser Dispersion durch Zugabe von 2-Dimethylaminoethanol auf eine Wert von 6 eingestellt.

Bei 20 V anodisierte poröse Aluminiumfolien der Größe 4 min * 4mm wurden in dieser Dispersion 1 min getränkt. Anschließend wurden die getränkten Elektrodenkörper unter fließendem Wasser abgespült, um die Dispersion auf den Außenseiten des Elektrodenkörpers zu entfernen. Danach erfolgte eine Trocknung bei 120°C für 10 min. Tränkung, Spülung und Trocknung wurden neun weitere Male durchgeführt.

Die Herstellung einer polymeren Außenschicht erfolgte analog zu Beispiel 4.3

Abschließend wurden die Elektrodenkörper mit einer Graphit und Silberschicht überzogen.

Die 9 gefertigten Kondensatoren hatten im Mittel folgende elektrischen Werte:

| | |
|---|---|
| Kapazität: | 14 μF |
| ESR: | 15 mΩ |
| Reststrom: | 0,26 μA |

Die Kapazität wurde bei 120 Hz und der äquivalente Serienwiderstand (ESR) bei 100 kHz mittels eines LCR Meters (Agilent 4284A) bestimmt. Der Reststrom wurde drei Minuten nach Anlegen einer 6,3 V Spannung mit einem Keithley 199 Multimeter bestimmt.

**Beispiel 6:**

6.1. Herstellung von oxidierten Elektrodenkörpern:

Nioboxidpulver mit einer spezifischen Kapazität von 80 000 μFV/g wurde unter Einschluss eines Tantaldrahtes 7 zu Pellets gepresst und gesintert, um einen mit den Abmessungen 5 mm * 3,5 mm* 1 mm zu bilden. Die porösen

Elektrodenkörper 2 wurden zur Bildung eines Dielektrikums in einem Phosphorsäureelektrolyten auf 30 V anodisiert.

6.2 Herstellung des Feststoffelektrolyten mit dem erfindungagemäßen Verfahren

Die oxidierten Elektrodenkörper wurden in der Dispersion A)-3 aus Beispiel 3,2 1 min getränkt. Anschließend wurden die getränkten Elektrodenkörper unter fließendem Wasser abgespült, um die Dispersion A)-3 auf den Außenseiten des Elektrodenkörpers zu entfernen. Danach erfolgte eine Trocknung bei 120°C für 10 min. Tränkung, Spülung und Trocknung wurden neun weitere Male durchgeführt.

6.3 Herstellung einer polymeren Außenschicht

Die Kondensatorkorper aus 3.2 wurden in dieser Dispersion A)-5 aus Beispiel 3.3 getränkt und anschließend 10 min bei 120°C getrocknet. Tränkung und Trocknung wurden ein zweites Mal durchgeführt.

Abschließend wurden die Elektrodenkörper mit einer Graphit und Silberschicht überwogen und 1 h lang bei einer Spannung von 15 V gealtert.

Die 18 gefertigten Kondensatoren hatten im Mittel folgende elektrischen Werte:

| | |
|---|---|
| Kapazität: | 114 µF |
| ESR: | 43 mΩ |
| Reststrom: | 3,5 µA |

Die Kapazität wurde bei 120 Hz und der äquivalente Serienwiderstand (ESR) bei 100 kHz mittels eines LCR Meters (Agilent 4284A) bei einer Biasspannung von 10 V bestimmt. Der Reststrom wurde drei Minuten nach Anlegen einer 10 V Spannung mit einem Keithley 199 Multimeter bestimmt.

**Vergleichsbeispiel 3:**

18 anodisierte Elektrodenkörper wurden analog zu Beispiel 6.1 hergestellt. Diese Elektrodenkörper wurden mittels einer chemischen in-situ Polymerisation mit einem Feststoffelektrolyten versehen.

Dazu wurde eine Lösung, bestehend aus einem Gewichtsteil 3,4-Ethylendioxythiophen (BAYTRON® M, H.C. Starck GmbH) und 20 Gewichtsteilen einer 40 Gew.-%igen ethanolischen Lösung von Eisen(III)-p-toluolsulfonat (BAYTRON® C-E, H.C. Starck GmbH) hergestellt.

Die Lösung wurde zur Imprägnierung der anodisierten Elektrodenkörper 2 verwendet. Die Elektrodenkörper 2 wurden in dieser Lösung getränkt und anschließend für 30 min bei Raumtemperatur (20°C) getrocknet. Danach wurden sie 30 min bei 50°C in einem Trockenschrank wärmebehandelt. Anschließend wurden die Elektrodenkörper in einer 2 Gew.-% igen wässrigen Lösung von p-Toluolsäure 60 min lang gewaschen. Die Elektrodenkörper wurden 30 min in einer 0,25 Gew.-% wässrigen Lösung von p-Toluolsulfonsäure reformiert, anschließend in destilliertem Wasser gespült und getrocknet. Die beschriebene Tränkung, Trocknung, Temperaturbehandlung und Reformierung wurde mit denselben Elektrodenkörperm noch zwei weitere Male durchgeführt.

Anschließend wurden die Kondensatorkörper analog zu Beispiel 6.3 mit einer polymeren Außenschicht versehen. Abschließend wurden die Elektrodenkörper mit einer Graphit und Silberschicht überzogen und 1 h lang bei einer Spannung von 15 V gealtert.

Alle Kondensatoren waren nach Herstellung elektrisch kurzgeschlossen.

Mit dem erfindungsgemäßen Verfahren lassen sich demnach aus Niob oder Nioboxid basieren Elektrodenmaterialien Polymer-Feststoffelektrolyt-Kondensatoren mit niedrigem ESR und niedrigem Reststrom herstellen (Beispiel 6). Mit herkömmlichen chemischen in-situ Polymerisationsverfahren ist es dagegen nicht möglich, niedrige Restströme zu erreichen (Vergleichsbeispiel 3).

**Patentansprüche**

1. Elektrolytkondensator beinhaltend einen Feststoffelektrolyt, **dadurch gekennzeichnet, dass** der Elektrolytkondensator eine spezifische Ladung von 500 bis 500000 µC/g besitzt, bezogen auf das Gewicht des mit einem Dielektrikum überzogenen Elektrodenkörpers.

2. Elektrolytkondensator nach Anspruch 1, **dadurch gekennzeichnet, dass** der Elektrolytkondensator eine spezifische Ladung von 10000 bis 150000 µC/g besitzt und der Feststoffelektrolyt wenigstens ein polymeres Anion enthält.

3. Elektrolytkondensator gemäß Anspruch 1 oder Anspruch 2, **dadurch gekennzeichnet, dass** der Elektrolytkondensator einen Aufbau:

- Poröser Elektrodenkörper (2)
- Dielektrikum (3)
- Feststoffelektrolyt (4)
- Gegebenenfalls leitfähiger Außenschicht (5)
- Graphit/Silberschicht (6)

aufweist.

4. Elektrolytkondensator gemäß einem der vorhergehenden Ansprüche, **dadurch gekennzeichnet, dass** der Feststoffelektrolyt ein elektrisch leitfähiges Polymer beinhaltet.

5. Elektrolytkondensator gemäß einem der vorhergehenden Ansprüche, **dadurch gekennzeichnet, dass** das elektrisch leitfähige Polymer wenigstens ein Polythiophen, Polypyrrol oder Polyanilin enthält, die gegebenenfalls substituiert sind.

6. Elektrolytkondensator gemäß einem der vorhergehenden Ansprüche, **dadurch gekennzeichnet, dass** das elektrisch leitfähige Polymer wenigstens ein Polythiophen mit wiederkehrenden Einheiten der allgemeinen Formel (I) oder der Formel (II) oder wiederkehrenden Einheiten der allgemeinen Formeln (I) und (II) enthält,

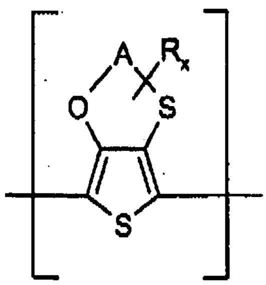
(I)

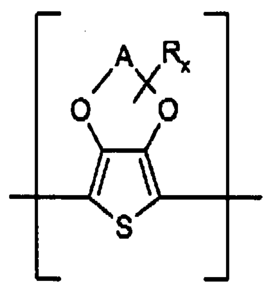
(II)

worin

A für einen gegebenenfalls substituierten $C_1$-$C_5$-Alkylenrest steht,
R für einen linearen oder verzweigten, gegebenenfalls substituierten $C_1$-$C_{18}$-Alkyl- rest, einen gegebenenfalls substituierten $C_5$-$C_{12}$-Cycloalkylrest, einen gegebe- nenfalls substituierten $C_6$-$C_{14}$-Arylrest, einen gegebenenfalls substituierten $C_7$- $C_{18}$-Aralkylrest einen gegebenenfalls substituierten $C_1$-$C_4$-Hydroxyalkylrest oder einen Hydroxylrest steht,
x für eine ganze Zahl von 0 bis 8 steht und

für den Fall, dass mehrere Reste R an A gebunden sind, diese gleich oder unterschiedlich sein können.

7. Elektrolytkondensator gemäß einem der vorhergehenden Ansprüche, **dadurch gekennzeichnet, dass** das leitfähige Polymer Poly(3,4-ethylendioxythiophen) ist.

8. Elektrolytkondensator gemäß einem der vorhergehenden Ansprüche, **dadurch gekennzeichnet, dass** der Feststoffelektrolyt zusätzlich wenigstens ein polymeres Anion enthält.

9. Elektrolytkondensator gemäß einem der vorhergehenden Ansprüche, **dadurch gekennzeichnet, dass** das polymere Anion ein Anion einer polymeren Carbon- oder Sulfonsäure, bevorzugt Polystyrolsulfonsäure ist.

10. Elektrolytkondensator gemäß einem der Ansprüche 3 bis 9, **dadurch gekennzeichnet, dass** es sich bei dem Elektrodenmaterial des Elektmdenkörpers (2) um ein Ventilmetall oder eine Verbindung mit einem Ventilmetall

vergleichbaren elektrischen Eigenschaften handelt.

**11.** Elektrolytkondensator gemäß Anspruch 10, **dadurch gekennzeichnet, dass** es sich bei dem Ventilmetall oder bei der Verbindung mit einem Ventilmetall vergleichbaren elektrischen Eigenschaften um Tantal, Niob, Aluminium, Titan, Zirkon, Hafnium, Vanadium, eine Legierung oder Verbindung von wenigstens einem dieser Metalle mit anderen Elementen oder NbO oder eine Legierung oder Verbindung von NbO mit anderen Elementen handelt.

**12.** Elektrolytkondensator gemäß Anspruch 10 oder 11, **dadurch gekennzeichnet, dass** das Elektrodenmaterial auf Niob oder NbO basiert.

**13.** Elektrolytkondensator gemäß Anspruch 12, **dadurch gekennzeichnet, dass** es sich bei dem Elektrodenmaterial, das auf Niob oder Nioboxid basiert, um Niob, NbO, ein Nioboxid $NbO_x$, wobei x Werte von 0,8 bis 1,2 annehmen kann, Niobnitrid, Nioboxynitrid oder Mischungen dieser Materialien oder um eine Legierung oder Verbindung von wenigstens einem dieser Materialien mit anderen Elementen handelt.

**14.** Elektrolytkondensator gemäß wenigstens einem der Ansprüche 10 bis 13, **dadurch gekennzeichnet, dass** es sich bei dem Dielektrikum um ein Oxid des Ventilmetalls oder ein Oxid der Verbindung mit einem Ventilmetall vergleichbaren elektrischen Eigenschaften handelt.

**15.** Verwendung von Elektrolytkondensatoren gemäß wenigstens einem der Ansprüche 1 bis 14 in elektronischen Schaltungen.

**16.** Elektronische Schaltung enthaltend einen Elektrolytkondensator gemäß wenigstens einem der Ansprüche 1 bis 14.

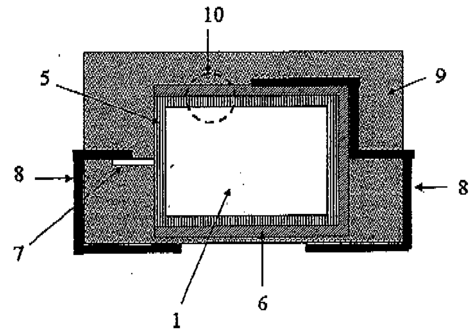


Fig. 1

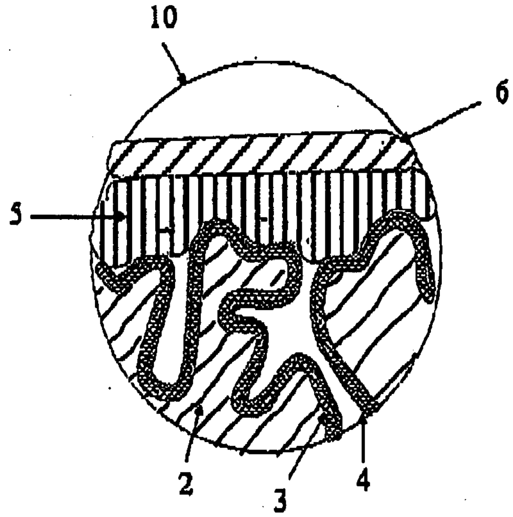


Fig. 2

Europäisches Patentamt
European Patent Office
Office européen des brevets

# EUROPÄISCHER RECHERCHENBERICHT

Nummer der Anmeldung
EP 10 01 2041

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | EP 1 524 678 A2 (STARCK H C GMBH [DE]) 20. April 2005 (2005-04-20)<br>* Absatz [0037] - Absatz [0038] *<br>* Absatz [0071] - Absatz [0078] *<br>* Absatz [0083] - Absatz [0090] *<br>* Absatz [0159] *<br>----- | 1-16 | INV.<br>H01G9/042<br>H01G9/15 |
| A | EP 1 498 920 A2 (STARCK H C GMBH [DE] STARCK H C GMBH CO KG [DE]) 19. Januar 2005 (2005-01-19)<br>* Absatz [0011] *<br>* Absatz [0027] - Absatz [0030] *<br>* Absatz [0035] - Absatz [0040] *<br>* Absatz [0100] - Absatz [0103] *<br>----- | 1-16 | |
| A | US 2003/133256 A1 (YOSHIDA TSUNENORI [JP] ET AL) 17. Juli 2003 (2003-07-17)<br>* Absatz [0035] - Absatz [0037] *<br>* Absatz [0060] *<br>----- | 1,3-7, 10-14 | |
| A | US 6 001 281 A (LESSNER PHILIP M [US] ET AL) 14. Dezember 1999 (1999-12-14)<br>* Beispiel 4 *<br>----- | 1,4-7, 10,11,14 | RECHERCHIERTE SACHGEBIETE (IPC)<br>H01G |

Der vorliegende Recherchenbericht wurde für alle Patentansprüche erstellt

| Recherchenort | Abschlußdatum der Recherche | Prüfer |
|---|---|---|
| München | 18. November 2010 | Ketterl, Friedrich |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

1

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 10 01 2041

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-11-2010

| Im Recherchenbericht angeführtes Patentdokument | | Datum der Veröffentlichung | Mitglied(er) der Patentfamilie | | | Datum der Veröffentlichung |
|---|---|---|---|---|---|---|
| EP 1524678 | A2 | 20-04-2005 | AT | 440373 | T | 15-09-2009 |
| | | | CN | 1610027 | A | 27-04-2005 |
| | | | DK | 1524678 | T3 | 02-11-2009 |
| | | | ES | 2329898 | T3 | 02-12-2009 |
| | | | JP | 2005123630 | A | 12-05-2005 |
| | | | KR | 20050037377 | A | 21-04-2005 |
| | | | MX | PA04010203 | A | 21-04-2005 |
| | | | PT | 1524678 | E | 19-10-2009 |
| | | | US | 2005111165 | A1 | 26-05-2005 |
| EP 1498920 | A2 | 19-01-2005 | CN | 1577657 | A | 09-02-2005 |
| | | | DE | 10331673 | A1 | 10-02-2005 |
| | | | IL | 162969 | A | 05-06-2008 |
| | | | JP | 2005039276 | A | 10-02-2005 |
| | | | KR | 20050009178 | A | 24-01-2005 |
| | | | MX | PA04006768 | A | 19-04-2005 |
| | | | US | 2005013094 | A1 | 20-01-2005 |
| US 2003133256 | A1 | 17-07-2003 | KEINE | | | |
| US 6001281 | A | 14-12-1999 | AU | 5458099 | A | 27-03-2000 |
| | | | CZ | 20010785 | A3 | 15-08-2001 |
| | | | DE | 19983548 | T0 | 02-08-2001 |
| | | | GB | 2357513 | A | 27-06-2001 |
| | | | JP | 2002524593 | T | 06-08-2002 |
| | | | MX | PA01002287 | A | 20-08-2002 |
| | | | WO | 0014139 | A1 | 16-03-2000 |
| | | | US | 6056899 | A | 02-05-2000 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 340512 A
- JP 2001102255 A
- EP 440957 A
- US 5300575 A
- DE 19627071 A
- US 6376105 B
- EP 1524678 A
- US 6981663 B


### In der Beschreibung aufgeführte Nicht-Patentliteratur


- **Colloid.** *Polym. Sci.,* 1989, vol. 267, 1113-1116
- **Houben Weyl.** Methoden der organischen Chemie. *Makromolekulare Stoffe,* 1987, vol. 20, 1141
- **L Groenendaal ; F. Jonas ; D. Freitag ; H. Pielartzik ; J. R. Reynolds.** *Adv. Mater.,* 2000, vol. 12, 481-494
- **P. Blanchard ; A. Cappon ; E. Levillain ; Y. Nicolas ; P. Frère ; 1. Roncali.** *Org. Lett.,* 2002, vol. 4 (4), 607-609